# EUROPÄISCHE PATENTANMELDUNG

(11) **EP 4 474 295 A1**
(43) Veröffentlichungstag der Anmeldung: **11.12.2024**
(21) Anmeldenummer: 23178387.9
(22) Anmeldetag: 09.06.2023
(51) Int. Cl.: B65B 9/04, B65B 9/20, B65B 25/00

(54) **VORRICHTUNG UND VERFAHREN ZUM HERSTELLEN VON MIT FLÜSSIGEM ODER PASTÖSEM FÜLLGUT GEFÜLLTEN PRALLEN PÄCKCHEN**

(71) Anmelder: Albert Handtmann Maschinenfabrik GmbH & Co. KG, 88400 Biberach (DE)
(72) Erfinder: Schließer, Markus, 88489 Wain (DE)
(74) Vertreter: Grünecker Patent- und Rechtsanwälte PartG mbB

(57) **Zusammenfassung**

Die Erfindung betrifft eine Vorrichtung und ein Verfahren zum Herstellen von mit flüssigem oder pastösem Füllgut, insbesondere mit flüssigen oder pastösen Lebensmitteln (14), gefüllten Päckchen, insbesondere Sachets (2), mit einer Koextrusionseinrichtung (3) zum Koextrudieren eines Strangs (10) aus einem mit dem Füllgut (14) gefüllten aushärtbaren Hüllenmaterial (15) wobei die Koextrusionseinrichtung (3) ein Füllrohr (9) zum Ausstoßen des Füllguts (14), sowie eine dem Füllrohr (9) zugeordnete Extrusionsdüse (13) mit einem Extrusionsspalt (11) zum Ausstoßen des Hüllenmaterials (15) umfasst, das Füllrohr (9) über eine Strecke X so über den Extrusionsspalt (11) vorsteht, dass das Hüllenmaterial (15) durch den Extrusionsspalt (11) auf das Füllrohr (9) extrudiert wird und sich entlang dem Füllrohr (9) verfestigen kann. Dabei weitet sich das überstehende Füllrohr (9) zumindest abschnittsweise in Richtung Auslassöffnung (12) auf und dehnt die extrudierte Hülle auf um ein pralles Päckchen zu erzeugen.

## Beschreibung

Herstellen von mit flüssigem Füllgut, insbesondere Lebensmitteln gefüllten Päckchen, insbesondere Sachets gemäß den Oberbegriffen der Ansprüche 1 und 14.

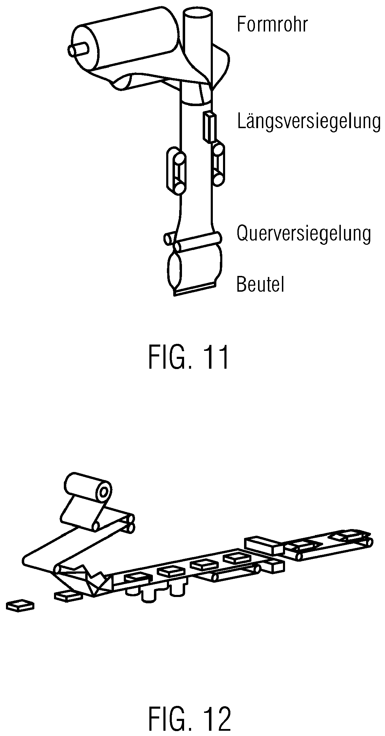

Aus dem Stand der Technik ist es bereits bekannt, ein Füllgut, z.B. Kosmetika, Lebensmittel etc. in Einzelpäckchen, insbesondere sogenannten Sachets zu verpacken. Bei Sachets handelt es sich um eine Sonderform von Päckchen, welche an ihren Enden flachgedrückte flächige Endbereiche aufweisen. Hergestellt werden solche Verpackungen meist mit Schlauchbeutelmaschinen. Figur 11 zeigt beispielsweise die Funktionsweise einer solchen vertikalen Schlauchbeutelmaschine. Hierzu wird eine Packstoffhülle erzeugt, um ein Formrohr gewunden und mittels Längssiegelnaht verschlossen. Der so erzeugte Schlauch wird über das Formrohr mit dem zu verpackenden Produkt, z.B. Ketchup, gefüllt und mittels Verschlussstempel an einer Quersiegelnaht verschlossen. Die Verschlussstempel müssen beim Abfüllvorgang dabei in der Regel für eine gewisse Zeit geschlossen bleiben, was die Produktionsleistung herabsetzt. Andererseits ist eine ausreichende Siegelzeit notwendig, um eine ausreichende Festigkeit der Siegelstelle zu erzeugen. Oft verklebt auch die Hülle beim Versiegeln. Insgesamt ist das zuvor beschriebene Verfahren aufwendig und nur bedingt geeignet bei der Verwendung von biologisch abbaubaren Hüllenmaterialien (koextrudierten Hüllen), wie beispielsweise Alginathüllen, Pektinhüllen oder Collagenhüllen.

Figur 12 zeigt schematisch eine horizontale Schlauchbeutelmaschine, die ähnliche Probleme wie die in Zusammenhang mit Figur 11 gezeigte vertikale Schlauchbeutelmaschine aufweist. Insbesondere kann mit der horizontalen Schlauchbeutelmaschine keine Flüssigkeit verpackt werden.

Aber auch durch Abdrehen unterteilte mit flüssigem oder pastösem Füllgut gefüllten Päckchen sind bereits aus dem Stand der Technik bekannt.

Insbesondere ist es wünschenswert, wenn erzeugte Einzelpäckchen prall gefüllt sind.

Hiervon ausgehend liegt der vorliegenden Erfindung die Aufgabe zugrunde, eine Vorrichtung und ein Verfahren zum vereinfachten und effizienteren sowie umweltfreundlichen Herstellen von prall gefüllten mit flüssigem oder pastösem Füllgut gefüllten Päckchen, insbesondere Sachets bereitzustellen.

Erfindungsgemäß wird diese Aufgabe durch die Merkmale der Ansprüche 1 und 14 gelöst.

Gemäß der Erfindung umfasst die Vorrichtung zum Herstellen von mit flüssigen oder pastösen Füllgut, insbesondere Lebensmitteln gefüllten Päckchen, insbesondere Sachets eine Koextrusionseinrichtung zum Koextrudieren eines Strangs aus einem mit dem Füllgut gefüllten Hüllenmaterial. Eine solche Koextrusionseinrichtung extrudiert das Füllgut bzw. das Lebensmittel und das Hüllenmaterial gleichzeitig. Eine solche Koextrusionseinrichtung ist dazu geeignet, als Hüllenmaterial ein mittels Fixierlösung aushärtbares Hüllenmaterial, insbesondere Gel zu extrudieren, vorzugsweise ein biologisch abbaubares Hüllenmaterial, wie z.B. ein Alginatgel, Pektin- oder ein Collagengel. Ein Alginatgel ist für Lebensmittel besonders vorteilhaft. Als Fixierlösung, dient z.B. eine Kalziumchlorid-Lösung. Die Fixierlösung wird z.B. auf die extrudierte Hülle im Bereich des vorstehenden Füllrohrs aufgebracht.

Die Päckchen schließen das Füllgut dicht ein wobei es sich bei einem Sachets um eine besondere Ausgestaltung eines Päckchens handelt, das an seinen Enden flachgepresste flächige Abteilstellen aufweist.

Unter Flüssigkeit versteht man hier z.B. ein Füllgut mit einer Viskosität von z.B.<= 70. 000mPas bei 20 °C also z.B. auch Füllgut, das eine Konsistenz hat wie z.B. Ketchup oder Senf, Suppe, Shampoo, Creme, Honig, Konfitüre, etc., insbesondere z.B. < 5000 mPas bei 20°C (z.B. auch Apfelmus, Babynahrung, Salatdressing) und weiter insbesondere z.B. <= 1000 mPas bei 20°C (z.B. auch Saft, Öl). Die Vorrichtung ist also aber ebenso dazu geeignet mit pastösem Füllgut gefüllte Sachets zu erzeugen mit höheren Viskositäten.

Gemäß der Erfindung weist die Koextrusionseinrichtung ein Füllrohr zum Ausstoßen des Füllguts bzw. Lebensmittels auf, sowie eine dem Füllrohr zugeordnete Extrusionsdüse mit einem im Wesentlichen z.B. ringförmigen Extrusionsspalt zum Ausstoßen des Hüllenmaterials. Vorzugsweise steht das Füllrohr über eine Strecke X so über den Extrusionsspalt vor, dass das Hüllenmaterial durch den Extrusionsspalt auf das Füllrohr extrudiert werden kann und sich entlang dem Füllrohr zumindest teilweise verfestigen kann, d.h., wenn z.B. eine Fixierlösung auf das Füllrohr aufgebracht wird. Eine Ausführung, bei der das Füllrohr über die Extrusionsdüse für das Hüllenmaterial vorsteht, ist besonders vorteilhaft, da man dann den Abstand zwischen Füllrohr und einer nachfolgenden Einheit, wie z.B. Transporteinrichtung oder Verdrängereinrichtung minimieren kann. Dies hat den Vorteil, dass das extrudierte Material nicht nach unten durchhängt und dass das Abteilen des Strangs zum frühestmöglichen Zeitpunkt erfolgt.

Das überstehende Füllrohr ist insbesondere auch deshalb vorteilhaft, weil seine Form und auch Größe d.h. Querschnittsfläche veränderbar ist. Bei Koextrusionsvorrichtungen ohne überstehendem Füllrohr ist dies nicht möglich.

Erfindungsgemäß weitet sich das überstehende Füllrohr in Richtung Auslassöffnung auf. Das bedeutet, dass der Umfang des Füllrohrs in Ausstoßrichtung, d.h. in Richtung Auslassöffnung des Füllrohrs zunimmt.

Dabei kann die Querschnittsform über die Länge des Füllrohrs gleichbleiben, z.B. einen konstanten runden Querschnitt aufweisen oder sich ändern- solange der Umfang die Querschnittfläche bzw. der Umfang zunimmt. So kann beispielweise die Querschnittsform der Auslassöffnung eine geringere Höhe aufweisen als am Anfang des Füllrohrs aber dafür eine größere Breite - d.h. dass das Füllrohr flacher ausgebildet ist gleichzeitig aber der Umfang bzw. die Querschnittsfläche der Auslassöffnung größer ist als am Anfang des Füllrohrs.

Dadurch, dass das Füllrohr keine konstante Querschnittsfläche über seine Länge aufweist, sondern die Querschnittsfläche bzw. der Umfang sich in Richtung Auslassöffnung erweitert, d.h., das überstehende Füllrohr sich zumindest abschnittsweise in Richtung Auslassöffnung erweitert, ergibt sich der Vorteil, dass das Produkt praller gefüllt werden kann. Wenn die Hülle auf das Füllrohr extrudiert wird, ist sie noch nicht vollständig ausgehärtet und wird während des Aushärtens über das sich aufweitende Füllrohr, insbesondere über einen Konus gezogen und aufgedehnt. Dadurch weist die Hülle eine größere Vorspannung auf, was dazu führt, dass das Päckchen, bzw. das Sachet praller gefüllt werden kann. Würde der Außendurchmesser des Füllrohrs konstant sein, so wäre das Päckchen, bzw. Sachet schlaffer gefüllt, da die aushärtbare Hülle kein "Nennkaliber" besitzt, sondern sich aufweitet, ähnlich wie ein Luftballon. Somit können ansprechende Päckchen, bzw. Sachets produziert werden.

Die Vorrichtung kann gemäß einer bevorzugten Ausführungsform eine Gleitmitteleinrichtung zum Zuführen eines Gleitmittels (z.B. Wasser oder eine Fixierlösung) zwischen Füllrohr und ausgestoßenem Hüllenmaterial aufweisen. Es hat sich gezeigt, dass für die Herstellung der Sachets eine solche Ausgestaltung besonders geeignet ist, da die Hülle dann schonend auf das Füllrohr produziert werden und von diesem abgezogen werden kann. Dies ist insbesondere vorteilhaft, wenn sich die Außenkontur ändert, da das extrudierte Hüllenmaterial dann auf dem Gleitmittelfilm gleitet und nicht verletzt wird. Das ist besonders vorteilhaft, wenn sich beim Aufweiten auch die äußere Form ändert, z.B. von einer zylindrischen Außenkontur zu einer polygonen Form, z.B. eine rechteckige Außenkontur ggfs. mit abgerundeten Ecken.

Gemäß einem bevorzugten Ausführungsbeispiel weitet sich das überstehende Füllrohr zumindest abschnittsweise konisch auf. Eine konische Aufweitung ist besonders schonend für die Hülle.

Gemäß einer weiteren bevorzugten Ausführungsform weist ein in Ausstoß- bzw. Transportrichtung betrachteter vorderer Abschnitt des Füllrohrs eine erste Querschnittsfläche auf und weist insbesondere eine zylindrische Außenkontur auf. Ein in Ausstoßrichtung bzw. Transportrichtung betrachtet hinterer Abschnitt weist eine sich erweiternde Querschnittsfläche auf und weist insbesondere eine kegelstumpfförmige Außenkontur auf.

Vorteilhafterweise ist das ganze überstehende Füllrohr austauschbar angeordnet oder der vordere Abschnitt des vorstehenden Füllrohrs kann fest am Koextrusionskopf angeordnet sein und der hintere Abschnitt ist austauschbar angeordnet. So kann durch einfaches Auswechseln des Füllrohrs oder des hinteren Abschnitts die Prallheit des Päckchens, bzw. Sachets geändert werden oder aber auch die Form, beispielsweise vom runden Querschnitt auf eckigen Querschnitt etc.

Gemäß einer bevorzugten Ausführungsform weitet sich die Querschnittsfläche des überstehenden Füllrohrs von Anfang des überstehenden Füllrohrs bis zur Auslassöffnung um >0% - 150%, vorzugsweise 10 - 100% auf. In diesem Bereich kann die Prallheit des fertigen Produkts besonders gut eingestellt werden.

Gemäß einem bevorzugten Ausführungsbeispiel kann der hintere Abschnitt aus einem unterschiedlichen Material als der vordere Abschnitt gebildet sein, insbesondere aus einem Kunststoff, z.B. POM, PTFE etc. Der vordere Abschnitt oder das gesamte Füllrohr kann aus Edelstahl gefertigt sein. Die Verwendung eines entsprechenden Kunststoffs erleichtert das Ausbilden von Übergängen vom vorderen Abschnitt, der beispielsweise eine zylindrische Außenkontur hat zu einem hinteren Abschnitt, der eine abweichende Außenkontur aufweist. Somit können fließende Übergänge gefertigt werden.

Gemäß einer bevorzugten Ausführungsform weist der vordere Abschnitt des Füllrohrs eine kürzere Länge auf als der hintere Abschnitt des Füllrohrs. Dies ist besonders vorteilhaft, wenn flie-ßende Übergänge der Außenkontur gewünscht sind.

Vorteilhafterweise weist die Vorrichtung eine Abteileinrichtung auf, um den Strang in einzelne Päckchen, bzw. Sachets zu unterteilen und flüssigkeitsdicht abzudichten.

Gemäß einem Ausführungsbeispiel weist die Abteileinrichtung eine Verdrängereinrichtung auf, die das Material des Strangs an einer Abteilstelle verdrängt, insbesondere in Form gegenüberliegender in den Strang eingreifender Verdrängerelemente. Die Verdrängerelemente können dabei linear aufeinander zu bewegt werden oder aber umlaufend, z.B. auf umlaufenden Bändern angeordnet sein.

Ferner weist die Vorrichtung vorteilhafterweise eine Abdreheinrichtung auf, über die das Füllrohr derart gedreht werden kann, dass an der Abteilstelle der Strang abgedreht und ausgehärtet wird, sodass eine dichte Stelle zwischen aufeinanderfolgenden Päckchen erzeugt werden kann. Nachdem die Abteilstelle, bzw. die Abdrehstelle ausgehärtet ist, können die einzelnen Päckchen voneinander getrennt werden, d.h., abgeschnitten werden. Gerade in Kombination mit der oben genannten Verdrängereinrichtung und Abdreheinrichtung ist das sich aufweitende Füllrohr vorteilhaft, da bei diesen Produkten eine Prallheit besonders wünschenswert ist.

Dabei kann in Transportrichtung, bzw. Ausstoßrichtung hinter der Verdrängereinrichtung eine Transporteinrichtung angeordnet sein, die insbesondere in Form von gegenüberliegenden umlaufenden Transportmitteln, insbesondere Transportbändern oder -ketten gebildet ist, zwischen denen die erzeugten Päckchen transportiert werden können. Diese Transporteinrichtung kann die Päckchen verdrehsicher weitertransportieren, wobei die Päckchen oben und unten am Transportmittel anliegen und gehalten werden. Während des Transports können die Abteilstellen weiter aushärten.

Alternativ kann die Abteileinrichtung zum Herstellen von Sachets wie folgt ausgebildet sein.

Gemäß einer bevorzugten Ausführungsform weist die Vorrichtung gegenüberliegende umlaufende Abteilstempel auf, zwischen denen der von der Koextrusionseinrichtung erzeugte Strang transportiert werden kann. Die Abteilstempel können das Füllgut, insbesondere das Lebensmittel, wenn sie sich auf ihrer Umlaufbahn aufeinander zubewegen und in den Strang eingreifen, an einer Abteilstelle aus dem Hüllenmaterial ausstreifen und das Hüllenmaterial, das an dieser Stelle noch nicht vollständig ausgehärtet ist, an der Abteilstelle flächig zu einem Sachet verpressen.

Da die gegenüberliegenden Abteilstempel umlaufen, sind sie im vorderen Umlenkbereich (der der Koextrusionseinrichtung zugewandt ist) nicht parallel zueinander ausgerichtet. So streifen sie, wenn sie sich im Umlenkbereich aufeinander zubewegen - bis sie wieder im Wesentlichen parallel zueinander ausgerichtet sind- die Innenmasse, d.h. das Füllgut aus, so dass sich keine Innenmasse, sondern nur eine saubere Hülle in der Abteilstelle befindet. Die Abteilstelle kann so sauber verpresst und flüssigkeitsdicht verschlossen werden. Bei einem aushärtbaren Hüllenmaterial ist dabei in der Abteilstelle das Hüllenmaterial nicht vollständig ausgehärtet, d.h. nicht vollständig vernetzt, sodass sich das aushärtbare Hüllenmaterial auf der Ober- und Unterseite der Hülle innen in der Abteilstelle stoffschlüssig insbesondere auch homogen verbinden kann. Dies ist möglich, da die Abteilstempel in den koextrudierten Strang eingreifen und nicht, wie im Stand der Technik beschrieben, der Packstoff, d.h. die Folie vorab erzeugt wird.

Obwohl die Abteilstempel auch umlaufend an einer Welle angeordnet sein könnten, ist es besonders vorteilhaft, wenn die Vorrichtung eine Transporteinrichtung mit gegenüberliegenden, umlaufenden Transportmitteln, insbesondere Transportbändern oder - ketten aufweist, an denen jeweils die beabstandeten Abteilstempel angeordnet sind. Es sind dabei pro Transportmittel z.B. etwa 1 - 100 Abteilstempel angeordnet. Dabei können die gegenüberliegenden Abteilstempel im Umlenkbereich der Transportmittel, insbesondere der Transportbänder derart aufeinander zu bewegt werden, dass deren ebene Pressflächen zunächst unter einem Winkel zueinander ausgerichtet sind, wenn sie in den Strang eingreifen. Bei weiterer Bewegung aus dem Umlenkbereich kommen dann die Abteilstempel parallel zueinander zu liegen, derart, dass die Abteilstelle flächig verpresst werden kann. Bei dem Übergang vom Umlenkbereich zu einem Bereich, in dem die Pressflächen der Abteilstempel parallel zueinander ausgerichtet sind, wird dabei das Füllgut, insbesondere Lebensmittel aus dem Hüllenmaterial, wie zuvor auch beschrieben, ausgestreift. Es ist dann insbesondere vorteilhaft, dass beim Transport der so erzeugten Sachets in Transportrichtung die Abteilstempel die Abteilstellen weiter verpressen können, zumindest auf einem ersten Abschnitt der Transporteinrichtung. Somit können die Abteilstellen während des Transports in der Transporteinrichtung weiter aushärten und verlassen die Vorrichtung in einem stabilen Zustand.

Die zuvor genannten Ausführungsformen zur Herstellung der Päckchen mittels Abdrehen als auch die Herstellung der Sachets mittels Abteilstempel erlauben also das flüssigkeitsdichte Verpacken von Füllgut, da die Verdrängerelemente alles Füllgut aus der noch nicht ausgehärteten Hülle verdrängt haben und die Abteilstempel eine verpresste, glatte und faltenfreie Abteilstelle des noch nicht Ganz ausgehärteten Hüllenmaterial erzeugen.

Es ist vorteilhaft, wenn die Abteilstempel jeweils eine ebene Pressfläche aufweisen. Die ebene Pressfläche weist keine Vorsprünge oder Vertiefungen auf, sondern ist glatt. Sie liegt beim Verpressen vollflächig auf dem Hüllenmaterial auf. Somit kann eine besonders faltenfreie Abteilstelle erzeugt werden, so dass bei einem mit flüssigem bzw. niederviskosem Füllgut, insbesondere Lebensmitteln befüllten Sachet keine Flüssigkeit an der Abteilstelle austreten kann. Das Hüllenmaterial kann somit an der Abteilstelle vollflächig verpresst werden.

Eine Einrichtung zum Aufbringen eines Fixiermittels ist vorzugsweise in Transportrichtung betrachtet vor den umlaufenden Transportmitteln angeordnet, d.h. also zwischen der Extrusionsdüse für das Hüllenmaterial und der Transporteinrichtung. Das Fixiermittel macht die Hülle bereits ausreichend fest, so dass die Stempel das Hüllenmaterial beim Verpressen nicht zerstören und das Hüllenmaterial auch beim Abdrehen nicht beschädigt wird. Das Hüllenmaterial ist aber trotzdem noch nicht vollständig vernetzt, bzw. durchgeliert, sodass eine perfekt stoffschlüssige Verbindung zwischen dem oberen und unteren Hüllenmaterial beim Verpressen gewährleistet werden kann.

Gemäß einer bevorzugten Ausführungsform weist die Vorrichtung eine Trennvorrichtung auf, die aufeinanderfolgende Päckchen oder Sachets im Bereich der Abteilstelle voneinander trennt. Die Trennvorrichtung kann auch dergestalt ausgebildet sein, dass die Abteilstellen nicht vollständig durchtrennt, sondern nur perforiert werden.

Gemäß einer weiteren Ausführungsform der Vorrichtung können abwechselnd flache Abteilstellen und abgedrehte, also abgerundete Abteilstellen erzeugt werden, sodass Säckchen-artige Produkte entstehen.

Gemäß dem erfindungsgemäßen Verfahren zum Herstellen von mit flüssigen oder pastösen Füllgut, insbesondere Lebensmitteln gefüllten Päckchen oder Sachets wird ein Strang aus einem mit Füllgut, insbesondere Lebensmittel gefüllten aushärtbaren Hüllenmaterial über eine Koextrusionseinrichtung extrudiert.

Dabei weist die Koextrusionseinrichtung ein Füllrohr zum Ausstoßen des Füllguts, sowie eine dem Füllrohr zugeordnete Extrusionsdüse mit einem Extrusionsspalt zum Ausstoßen des Hüllenmaterials auf. Das Füllrohr steht über eine Strecke X über den Extrusionsspalt vor und das Hüllenmaterial wird durch den Extrusionsspalt auf das Füllrohr extrudiert und kann sich entlang dem Füllrohr verfestigen. Das Hüllenmaterial wird über das überstehende Füllrohr, das sich zumindest abschnittsweise in Richtung Auslassöffnung aufweitet, gezogen und dabei aufgedehnt. Somit können prall gefüllte Produkte erzeugt werden.

Eine Fixierlösung kann auf das Hüllenmaterial auf dem überstehenden Füllrohr aufgebracht werden. Das Füllgut kann im Strang an einer Abteilstelle verdrängt und das Hüllenmaterial an der Abteilstelle insbesondere durch Abdrehen oder durch flächiges Verpressen verschlossen werden.

Dabei kann das aushärtbare Hüllenmaterial ein Gel, insbesondere ein biologisch abbaubares Gel, vorzugsweise ein Alginatgel, Pektingel oder Collagengel sein.

Mit dem erfindungsgemäßen Verfahren können auf verbesserte Art und Weise Päckchen, insbesondere Sachets mit einer faltenfreien, glatten oder abgedrehten und somit dichten Abteilstelle hergestellt werden derart, dass auch Flüssigkeiten abgepackt werden können.

Die Prallheit des Päckchens oder des Sachets kann wesentlich verbessert werden.

Die vorliegende Erfindung wird nachfolgend unter Bezugnahme der folgenden Figuren näher erläutert.
- Figur 1: zeigt grob schematisch eine Seitenansicht gemäß einem Ausführungsbeispiel der vorliegenden Erfindung.
- Figur 2: zeigt schematisch eine Verdrängereinrichtung mit zwei gegenüberliegenden Verdrängerelementen.
- Figur 3: zeigt einen Querschnitt durch eine Koextrusionseinrichtung gemäß der vorliegenden Erfindung.
- Figur 4: zeigt schematisch eine weitere Ausführungsform gemäß der vorliegenden Erfindung.
- Figur 5: zeigt schematisch eine detailliertere Ansicht eines in Figur 4 gezeigten Ausführungsbeispiels.
- Figur 6: zeigt eine Seitenansicht eines sich in Transportrichtung erweiternden Füllrohrs.
- Figur 7a: zeigt schematisch hergestellte Sachets in einer Kette und getrennte Sachets.
- Figur 7b: zeigt schematisch hergestellte Päckchen in einer Kette und getrennte Päckchen.
- Figur 8: zeigt schematisch eine Aufsicht auf ein Transportmittel gemäß einem Ausführungsbeispiel der vorliegenden Erfindung.
- Figur 9: zeigt schematisch in perspektivischer Darstellung einen Abteilstempel.
- Figur 10: zeigt ein Ausführungsbeispiel mit verlängertem unteren Transportmittel und integrierter Trenneinheit.

Figuren 11 und 12 zeigen Schlauchbeutelmaschinen gemäß dem Stand der Technik.

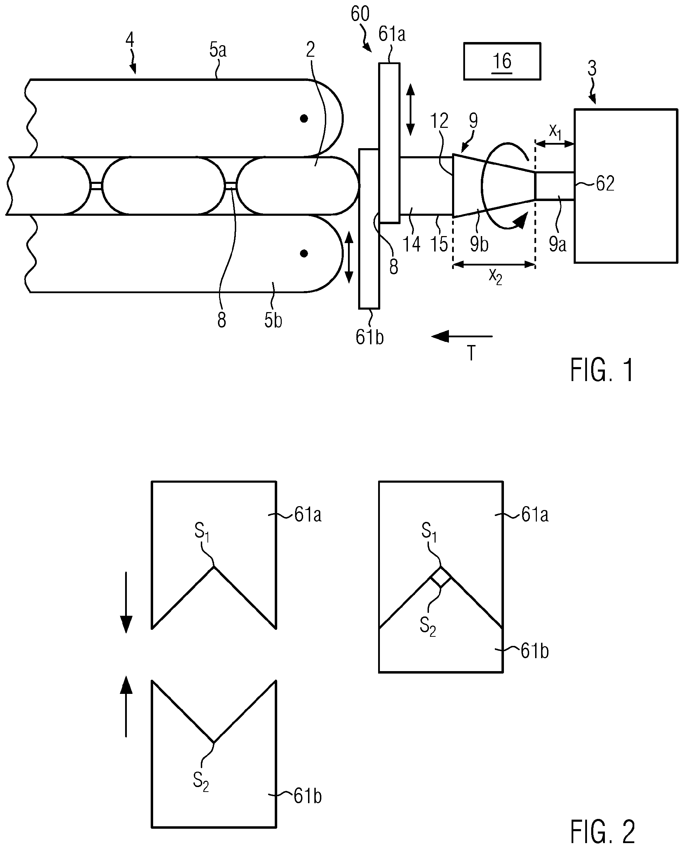

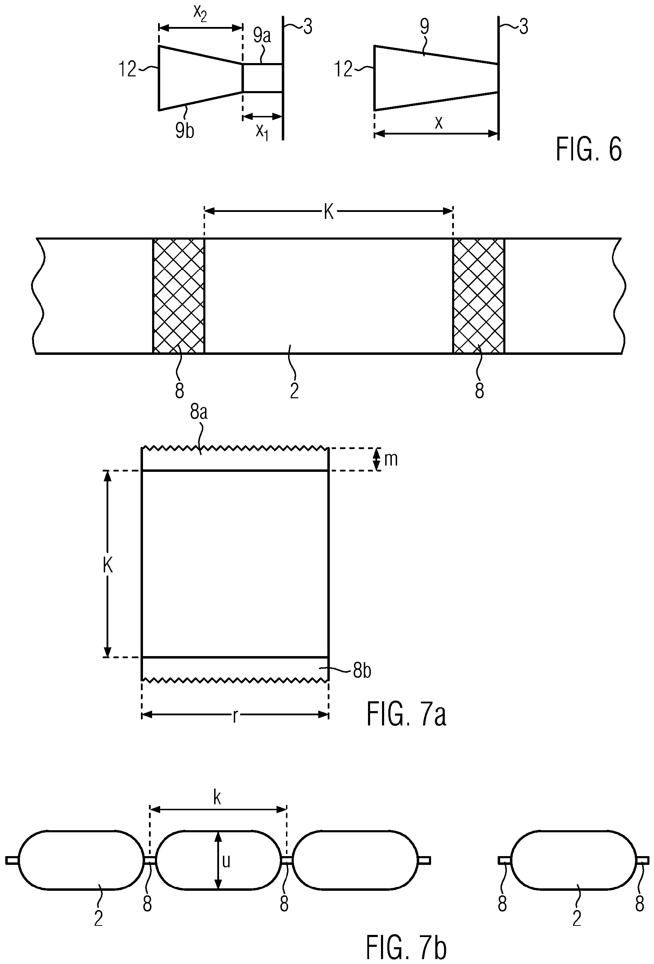

Figur 1 zeigt grob schematisch ein erstes Ausführungsbeispiel einer Vorrichtung 1 zum Herstellen von mit flüssigen oder pastösen Füllgut bzw. Lebensmitteln gefüllten abgedrehten Päckchen 2, wie sie z.B. in Fig. 7b dargestellt sind.

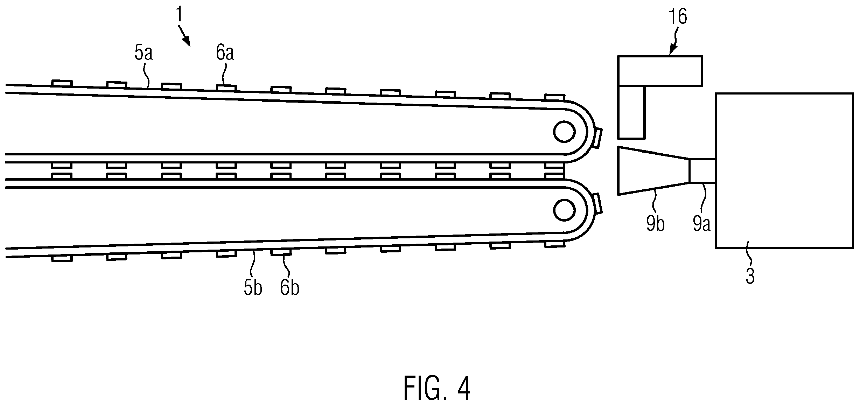

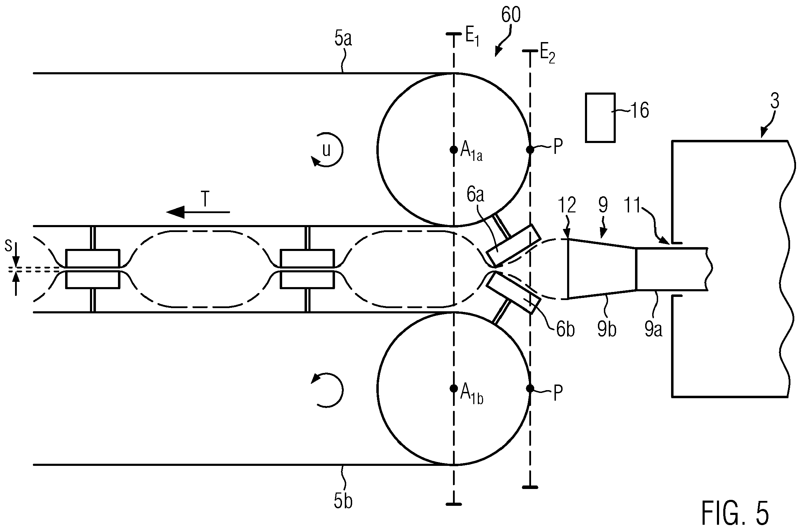

Figuren 4 und 5 zeigen ein zweites Ausführungsbeispiel zum Herstellen von Päckchen, hier in Form von Sachets, wie sie z.B. in Figuren 7a dargestellt sind.

Die nachfolgenden Ausführungsbeispiele werden anhand eines abzufüllenden Lebensmittels näher erläutert sind aber genauso für andere Füllgüter, d.h. Nichtlebensmittel geeignet.

Die Vorrichtung 1 gemäß dem ersten und zweiten Ausführungsbeispiel weist dabei eine Koextrusionseinrichtung 3 zum Koextrudieren eines Strangs aus mit einem Lebensmittel 14 gefüllten Hüllenmaterial 15 auf. Als Lebensmittel kann beispielsweise Ketchup, Senf, Marmelade, Honig, Brühwurst abgefüllt werden. Als Füllgut kommen z.B. auch Nichtlebensmittel in Frage wie z.B. Shampoo, Creme, Flüssigwaschmittel etc. Aber auch Füllgut, bzw. Lebensmittel mit einer höheren Viskosität kann dicht mit der erfindungsgemäßen Vorrichtung verpackt werden- auch hier ist die flüssigkeitsdichte Verpackung vorteilhaft, damit das Produkt nicht austrocknet.

Als aushärtbares Hüllenmaterial eignet sich insbesondere Alginatgel, alternativ Pektingel oder. Collagengel. Solche Materialien sind insbesondere deshalb vorteilhaft, weil sie biologisch abbaubar und auch verzehrbar sind und die Menge an Plastikabfall reduziert werden kann. Solche Materialen sind z.B. als Paste kommerziell erhältlich oder als Pulver, das mit Wasser angerührt wird.

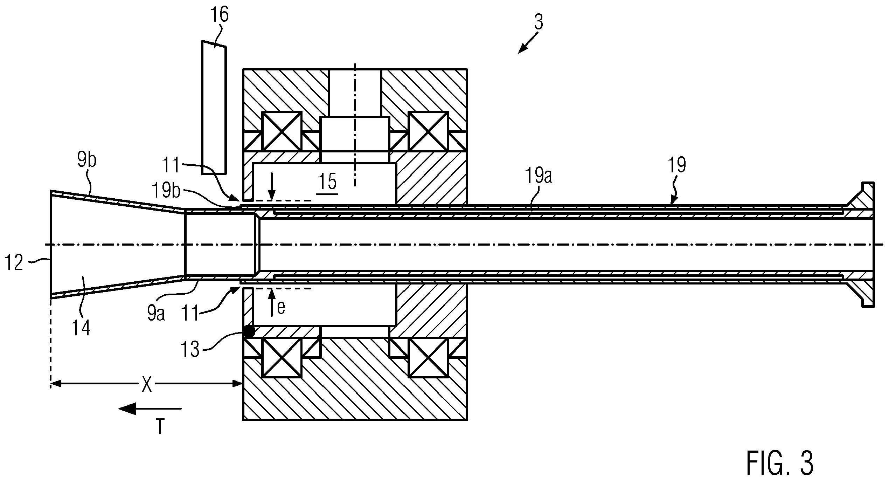

Figur 3 zeigt eine mögliche Ausführungsform einer solchen Koextrusionseinrichtung 3. Die Koextrusionseinrichtung 3 weist ein Füllrohr 9 auf zum Ausstoßen des Lebensmittels 14 sowie eine dem Füllrohr 9 zugeordnete Extrusionsdüse 13 mit einem vorzugsweise ringförmigen Extrusionsspalt 11 zum Ausstoßen des Hüllenmaterials 15. Wenn hier auch nicht dargestellt, so gibt es Koextrusionseinrichtungen, die das Hüllenmaterial 15 direkt auf die Außenfläche des Lebensmittels 14 ausstoßen. Bei flüssigen oder niederviskosen Materialien ist dies allerdings schwierig. So wird, wie in Figur 6 dargestellt, ein Füllrohr verwendet, das über die Strecke X so über den Extrusionsspalt 11 vorsteht, dass das Hüllenmaterial 15 durch den Extrusionsspalt 11 auf das Füllrohr 9 extrudiert wird und sich so entlang dem Füllrohr 9 verfestigen kann und dann zusammen mit dem extrudierten Lebensmittel 14 von dem Füllrohr 9 abgezogen werden kann. Damit sich das extrudierte Hüllenmaterial 15 bereits auf dem Füllrohr 9 anfängt zu verfestigen, kann eine Einrichtung 16 zum Aufbringen eines Fixiermittels im Bereich der Strecke X des Füllrohrs angeordnet sein. Als Fixiermittel eignet sich eine Salzlösung, insbesondere eine Kalziumchloridlösung, z.B. 10%ig.

Zusätzlich oder alternativ kann die Vorrichtung eine Gleitmitteleinrichtung 19 aufweisen zum Zuführen eines Gleitmittels zwischen Füllrohr 9 und ausgestoßenem Hüllenmaterial 15. So kann der Gleitwert zwischen dem Füllrohr und dem ausgestoßenen Hüllenmaterial minimiert werden. Als Gleitmittel kann beispielsweise Wasser zugeführt werden. Die Gleitmitteleinrichtung umfasst beispielsweise eine Zuführeinrichtung 19a für das Gleitmittel. Die Zufuhr 19a ist hier als Kanal im Füllrohr 9 ausgebildet. Zum Beispiel verläuft der Kanal ringförmig in der Füllrohrwandung. Im Bereich des Extrusionsspalts 11 ist ein weiterer Ringspalt um die Außenfläche des Füllrohrs 9 angeordnet. Dazu weist das Füllrohr 9 im Bereich hinter dem weiteren Ringspalt 19b einen kleineren Durchmesser auf als das Füllrohr in einem Bereich vor dem weiteren Ringspalt 19b. Über den Ringspalt 19b kann eine Inneneinspritzung des Gleitmittels zwischen dem ausgestoßenen Hüllenmaterial und der Oberfläche des Füllrohrs 9 erfolgen. Somit kann das ausgestoßene Hüllenmaterial gut auf dem Füllrohr gleiten.

Dadurch, dass das Füllrohr 9 über den Extrusionsspalt 11 vorsteht, kann es mit seiner Auslassöffnung 12 besonders nah an der in Transportrichtung T nachgeordneten Transporteinrichtung 4 angeordnet werden.

Figur 1 zeigt das erste Ausführungsbeispiel gemäß der vorliegenden Erfindung im größeren Detail.

Wie zuvor beschrieben weist die Vorrichtung 1 die Koextrusionseinrichtung sowie das Füllrohr 9 auf.

Gemäß der vorliegenden Erfindung weitet sich das Füllrohr zumindest abschnittsweise in Richtung Auslassöffnung 12 des Füllrohrs 9 auf - hat also am in Transportrichtung bzw. Ausstoßrichtung hinterem Ende einen größeren Umfang als am vorderen Ende an dem es über die Koextrusionseinrichtung vorsteht. Hier weist beispielsweise das Füllrohr einen vorderen Abschnitt 9a auf, der fest mit der Koextrusionseinrichtung 3 verbunden ist und insbesondere hohlzylindrisch ausgebildet ist. An diesen vorderen Abschnitt 9a schließt sich ein weiterer hinterer Abschnitt 9b des Füllrohrs an, der eine sich erweiternde Querschnittsfläche aufweist, insbesondere eine kegelstumpfförmige Außenkontur aufweist. Der vordere Abschnitt 9a ist der kürzere Abschnitt und weist beispielsweise eine Länge x1 in einem Bereich von 5 - 40 mm auf- siehe auch Fig. 6 und kann einen konstanten Querschnitt bzw. Umfang aufweisen. Der hintere Abschnitt 9b, der keine konstante Querschnittsfläche aufweist, sondern der sich in Ausstoßrichtung, bzw. Transportrichtung T aufweitet, weist beispielsweise eine Länge x2 in einem Bereich von 20 - 50 mm auf. Die Querschnittsfläche am Anfang des Bereichs x1 kann sich bis zur Auslassöffnung 12 hin um >0 - 150% aufweiten. Dabei muss der hintere Abschnitt 9b sich nicht zwangsläufig konisch aufweiten, sondern kann auch eine von der Kreisform abweichende Querschnittsfläche bzw. Außenkontur aufweisen, z.B. eine polygonförmige Außenkontur aufweisen, z.B. eine viereckige Querschnittsform, z.B. mit abgerundeten Ecken oder eine ovale Querschnittsfläche bzw. Außenkontur. Vorteilhafterweise ist der hintere Abschnitt 9b austauschbar angeordnet. Somit kann je nach zu produzierenden Päckchen ein entsprechender Füllrohraufsatz 9b am vorderen Füllrohrabschnitt 9a befestigt werden, beispielsweise durch Schraub-, Bajonett-, Schnapp- oder Pressverbindung.

Der hintere Abschnitt 9b, der insbesondere austauschbar ist, kann aus einem unterschiedlichen Material im Vergleich zum vorderen Abschnitt 9a gebildet sein. Der hintere Abschnitt 9b kann insbesondere aus einem Kunststoffmaterial gebildet sein, z.B. aus POM, PTFE, aber auch aus Edelstahl. Dadurch, dass der hintere Abschnitt 9b aus Kunststoff gebildet ist, können Übergänge zwischen einer ersten Außenkontur des vorderen Abschnitts des Füllrohrs 9a und des hinteren Abschnitts 9b fließend sein. So kann beispielsweise eine zylindrische Außenkontur im vorderen Abschnitt 9a fließend in einen aufgeweiteten Bereich mit z.B. einer polygonen z.B. auch rechteckigen Außenkontur (ggf. mit abgerundeten Ecken) oder ovalen Querschnittsfläche, bzw. Außenkontur übergehen.

Das Füllrohr 9 kann aber auch, wie die rechte Darstellung in Fig. 6 zeigt, einstückig ausgebildet sein.

Wenn, wie zuvor beschrieben wurde, die Koextrusionseinrichtung eine Gleitmitteleinrichtung 19 aufweist, kann das extrudierte Hüllenmaterial 15 auf dem Gleitmittel schwimmen und wird auch bei Änderung der Außenkontur nicht beschädigt. Dadurch, dass das auf das Füllrohr 9 extrudierte Hüllenmaterial 15 noch nicht völlig ausgehärtet ist, kann es durch das aufgeweitete Füllrohr 9 aufgedehnt werden. Dadurch weist die Hülle eine größere Vorspannung auf, d.h. das Päckchen ist prall gefüllt. Würde dasselbe Päckchen mit einer zylindrischen Tülle, d.h. einem zylindrischen Füllrohr oder einem Füllrohr mit konstantem Umfang und Außenkontur produziert werden, so wäre es nur schlaff gefüllt, weil das Hüllenmaterial kein "Nennkaliber" besitzt, sondern sich aufweitet, ähnlich wie ein Luftballon.

Im Anschluss an das Füllrohr in Transportrichtung kann eine Abteileinrichtung 60 angeordnet sein, die das Material des Strangs 10 in einzelne Päckchen unterteilt und abdichtet. Die Abteileinrichtung 60 weist eine Verdrängereinrichtung 61 auf, die das Füllgut in der Hülle des Strangs 10 an einer Abteilstelle 8 verdrängt. Die Verdrängereinrichtung weist insbesondere gegenüberliegende in den Strang 10 eingreifende Verdrängerelemente 61a und 61b auf, die beispielsweise in Figur 2 dargestellt sind und die jeweils V-förmige Ausschnitte aufweisen. Die Verdrängerelemente bewegen sich dabei, wie durch die Pfeile in Figur 1 und 2 dargestellt ist, aufeinander zu und schnüren den Strang 10 ein und verdrängen dabei das Füllgut. Dabei bewegen sich, wie aus der Figur 2 deutlich wird, die hintersten Punkte S1 und S2 der V-förmigen Ausschnitte aufeinander zu und zwar so weit, dass das Füllgut 14 aus der Abteilstelle verdrängt wird, jedoch die Hülle nicht abgeschert wird. Wie durch den Pfeil in Figur 1 dargestellt ist, weist die Abteileinrichtung 60 darüber hinaus eine Abdreheinrichtung 62 mit einem entsprechenden Abdrehgetriebe auf, über die das Füllrohr 9 um seine Längsachse gedreht werden kann, derart, dass an der Abteilstelle 8 der Strang 10 abgedreht wird, d.h., die Abdrehstelle hier einspringt und nachfolgend vollständig aushärten kann. Es kommt zu einer stoffschlüssigen Verbindung in der Abdrehstelle. Weiter weist dieses Ausführungsbeispiel eine Transporteinrichtung 4 auf, beispielsweise in Form von gegenüberliegenden umlaufenden Transportmitteln, hier Transportbändern, zwischen denen die Päckchen 2 liegen und in Transportrichtung T weiter transportiert werden können. Dabei kann die Transporteinrichtung 4 die Päckchen 2 vor Umdrehung sichern und halten. Während des Transports in der Transporteinrichtung 4 können die Abteilstellen 8 noch weiter aushärten. Zur Abteilung von zwei benachbarten Päckchen erfolgen beispielsweise 0,5 - 3, vorzugsweise mehr als 1,5 Umdrehungen des Füllrohrs. Wie z.B. in der Figur 7b dargestellt ist, kann entweder eine Kette von Päckchen hergestellt werden oder die Päckchen können im Anschluss an den Abteilstellen 8 voneinander getrennt werden auch in Ketten einer bestimmten Anzahl von Päckchen 2. Durch das Abdrehen kann eine flüssigkeitsdichte Verbindung erzeugt werden. Die Päckchen weisen beispielsweise eine Länge k von 20 - 200 mm auf und eine Abmessung u senkrecht zur Länge von 10 - 40 mm. Die Päckchen sind prall gefüllt und hier bauchig.

Figuren 4 und 5 zeigen das zweite Ausführungsbeispiel der vorliegenden Erfindung, wobei die Koextrusionseinrichtung und das Füllrohr wie zuvor beschrieben ausgebildet sind. Hier unterscheidet sich lediglich die Abteileinrichtung 60, die gegenüberliegende umlaufende Abteilstempel 6a, 6b aufweist, wie nachfolgend noch näher erläutert wird.

Hier weist die Transporteinrichtung gegenüberliegende umlaufende Transportmittel 5a,5b hier z.B. Transportbänder, auf, an denen jeweils beabstandete Abteilstempel 6a, 6b angeordnet sind. Unabhängig von diesem Ausführungsbeispiel können z.B. 1 - ca. 100 Abteilstempel an einem umlaufenden Transportmittel angeordnet sein.

Die Auslassöffnung 12 des Füllrohrs 9 ragt in diesem Ausführungsbeispiel so weit in Transportrichtung T vor, dass die Auslassöffnung 12 des Füllrohrs in einem Umlenkbereich zwischen den Transportmitteln angeordnet ist, d.h. in diesem Fall in einem Bereich hinter einer Ebene E2, auf der zumindest einer der vorderen Umlenkpunkte P der Transportbänder liegt und die senkrecht zur Transportrichtung T verläuft, d.h. hier senkrecht zur Bildebene. Das Füllrohr 9 reicht allerdings nur so weit in den Umlenkbereich, dass es zu keiner Kollision mit den Abteilstempeln 6a, 6b kommt. Dabei ist der Abstand von der Auslassöffnung 12 zu der Ebene E1, die senkrecht zur Transportrichtung T liegt und auf der zumindest eine der vorderen Achsen A1a, A1b um die die Transportmittel 5a, 5b umlaufen, liegt etwa 5 - 30 mm.

Wenn die Abteilstempel 6a, 6b auf den jeweiligen Transportmitteln 5a,5b umlaufen, passieren sie jeweils den Umlenkpunkt P und sind im Umlenkbereich zwischen den Ebenen E1 und E2 noch nicht parallel zueinander ausgerichtet. Dadurch, dass die Abteilstempel nicht parallel zueinander ausgerichtet sind, streifen sie, wenn sie im Umlenkbereich aufeinander zu bewegt werden, Innenmasse aus der Hülle aus, sodass sich keine Innenmasse, sondern nur eine saubere Hülle in der Abteilstelle 8 befindet, wenn die Abteilstempel 6a,6b dann parallel zueinander ausgerichtet sind und das Hüllenmaterial 15 verpressen. Die Abteilstelle 8 kann so sauber verpresst und (homogen) verbunden werden. Bei dem aushärtbaren Hüllenmaterial ist dabei in der Abteilstelle das Hüllenmaterial noch nicht vollständig ausgehärtet, d.h. noch nicht vollständig vernetzt, sodass sich das aushärtbare Hüllenmaterial auf der Ober- und Unterseite der Hülle in der Abteilstelle genau wie bei der Abdrehstelle 8 im ersten Ausführungsbeispiel stoffschlüssig verbinden kann. Beim Verpressen weisen die Abteilstempel 6a,6b beispielsweise einen Abstand s in einem Bereich von 0,1 - 0,5 mm auf. Dieser Abstand kann sich beispielsweise in Transportrichtung T noch verändern, indem z.B. der Abstand der Transportmittel an einem Ende, das dem Füllrohr zugewandt ist, größer ist als an einem entgegengesetzten hinteren Ende oder aber je nach Anwendungsfall gleich oder kleiner. So kann beispielsweise im vorderen und mittleren Bereich der Abstand in einem Bereich von 0,1 - 0,5 mm liegen und im hinteren Bereich bei einem Abstand von 0,1 - 1,0 mm. Der Abstand zwischen den Abteilstempeln kann auf beiden Seiten der Transportmittel unabhängig voneinander eingestellt werden, insbesondere durch Einstellen des Abstands der Transportmittel 5a,5b zueinander.

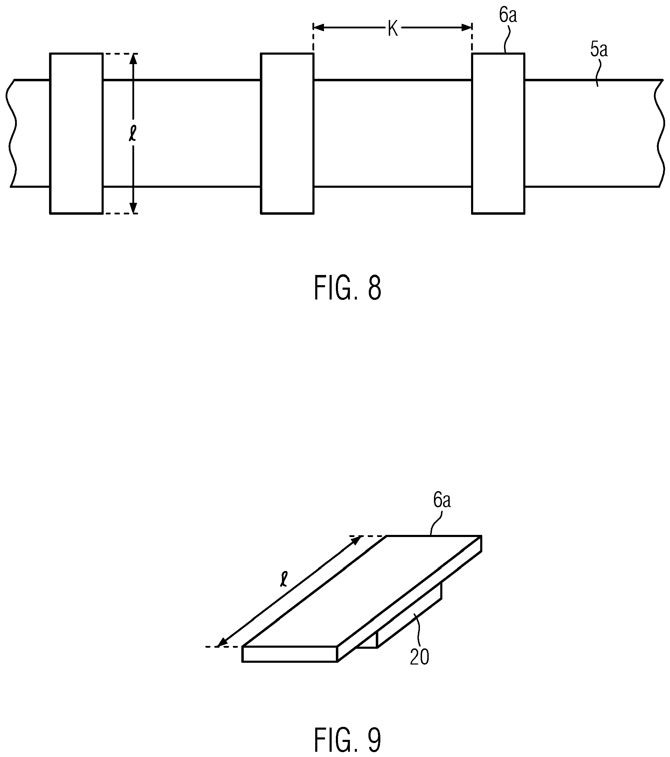

In Figuren 8 und 9 werden die Abteilstempel 6a,6b in größerem Detail dargestellt. Die Abteilstempel 6a, bzw. 6b weisen einen Abstand k voneinander auf, der dann wiederum im Wesentlichen dem Abstand k zwischen den Abteilstellen 8 im Sachet 2 entspricht (siehe Fig. 4). Die Abteilstempel 6a, 6b weisen jeweils eine ebene und vorzugsweise glatte Pressfläche auf. Die trägt auch zu einer faltenfreien Abteilstelle bei, sodass bei einem mit flüssigem oder niederviskosem Lebensmittel befüllten Sachet keine Flüssigkeit an der Abteilstelle 8 austreten kann.

Während des Transports der verpressten Sachets 2 in Transportrichtung T werden die Abteilstellen 8 also weiter durch die Abteilstempel 6a,6b verpresst, sodass die Abteilstellen 8 während des Transports weiter aushärten und die Transporteinrichtung in einem stabilen Zustand verlassen können.

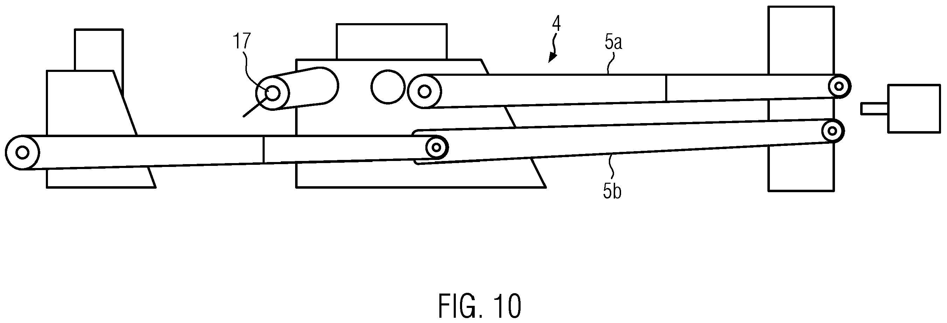

Bei beiden Ausführungsbeispielen der Transporteinrichtung, wie sie in Figur 4 oder 1 gezeigt ist, können die Päckchen, bzw. Sachets 2 die Vorrichtung am Ende entweder als Kette, bei der die einzelnen Sachets noch über die Abteilstelle 8 verbunden sind, oder einzeln verlassen. Die Päckchen bzw. Sachets 2 können über eine Trenneinrichtung 17 (Fig. 10) bereits in der Transporteinrichtung 4 oder anschließend in Einzelsachets vollständig getrennt oder perforiert werden, und zwar an der Abteilstelle 8. Aus diesem Grund ist es vorteilhaft, dass die Sachets flächig und faltenfrei an der Abteilstelle 8 verpresst werden, derart, dass keine Flüssigkeit, bzw. kein Lebensmittel aus dem Sachet 2 über Falten oder Kanäle austreten kann oder dass sie abgedreht werden. Es ist auch möglich, dass die Trenneinrichtung 17 bereits in den Stempel 6a, 6b integriert ist. Die ebene Pressfläche wird dann durch die Trenneinrichtung, bzw. das Messer in zwei ebene Pressflächen unterteilt.

Es ist aber wie bereits beschrieben auch möglich die zusammenhängenden Sachets mit einer nicht dargestellten Perforiereinrichtung im Bereich der Abteilstelle zu perforieren. Dann können die Sachets die Vorrichtung als Kette verlassen und vom Verbraucher einfach abgetrennt werden.

Figur 10 zeigt eine bevorzugte Ausführungsform der vorliegenden Erfindung. Das hier gezeigte Ausführungsbeispiel entspricht im Wesentlichen den vorherigen Ausführungsbeispielen, wobei allerdings das untere Transportband 5b entweder länger ist als das obere Transportband 5a oder ein weiteres unteres Transportmittel 5b in Transportrichtung an das erste untere Transportmittel 5b angrenzt, sodass der Produktstrang oder die Päckchen bzw. Sachets an das weitere untere Band übergeben werden kann.

Bei diesem Ausführungsbeispiel ist es möglich, dass ein Trennvorgang in Einzelportionen oder ein Perforiervorgang erfolgt, während der Transport nur noch auf dem unteren Band stattfindet. Dazu kann beispielsweise eine rotierende Trenneinrichtung 17 verwendet werden. Dadurch, dass das untere Transportmittel die abgeteilten Produkte von der Herstellung bis zum Trennvorgang transportiert, ergibt sich auch kein Übergabeproblem. Der Trennvorgang erfolgt in etwa in der Mitte der Abteilstelle 8 oder der Abdrehstelle mit geringer mechanischer Belastung. Das Transportelement, insbesondere das Abteilelement, kann beim Trennen zudem die Funktion einer Auflage für das Trennelement übernehmen.

Nachfolgend wird das erfindungsgemäße Verfahren unter Bezugnahme der Figuren näher erläutert.

Bei dem erfindungsgemäßen Verfahren zum Herstellen von gefüllten Sachets 2 wird zunächst ein Strang 10 aus einem mit Füllgut insbesondere Lebensmittel 14 gefüllten aushärtbarem Hüllenmaterial über die Koextrusionseinrichtung 3 extrudiert.

Vor dem Abteilen wird das Hüllenmaterial 15 noch mit einer Fixierlösung über eine Einrichtung 16 zum Aufbringen der Fixierlösung behandelt. Die Fixierlösung kann über die Einrichtung 16 beispielsweise auf das auf das Füllrohr 9 aufgebrachte Hüllenmaterial 9, z.B. ringförmig aufgesprüht werden und in einer Wanne aufgefangen werden. Als Fixierlösung dient insbesondere eine Salzlösung, z.B. Kalziumchloridlösung. Wie zuvor beschrieben kann vorteilhafterweise auch ein Gleitmittel zwischen Füllrohr und Hüllenmaterial 15 eingebracht werden.

Der so erzeugte koextrudierte Strang 10 wird am Ende des Füllrohrs 9 ausgestoßen.

Das Hüllenmaterial 15, das auf das in Richtung Auslassöffnung 12 aufgeweitete Füllrohr 9 extrudiert wird, ist auf dem Füllrohr noch nicht vollständig ausgehärtet. Dadurch wird das Hüllenmaterial aufgedehnt. Dadurch erhält das hergestellte Produkt, d.h. das Päckchen oder Sachet 2 eine Hülle mit größerer Vorspannung, was dazu führt, dass das Päckchen oder Sachet prall gefüllt werden kann. Anschließend wird, wie zuvor beschrieben, der Strang 10 an einer Abteilstelle entweder durch die Abteileinrichtung 60 mit den Abteilelementen 6a, 6b oder die Abteilrichtung 60 mit der Verdrängereinrichtung 61 und der Abdreheinrichtung 62 abgeteilt. Durch vollständige Verdrängung des Füllguts kann eine stoffschlüssige Verbindung entstehen.

Zu diesem Zeitpunkt ist das Hüllenmaterial 15 noch nicht vollständig ausgehärtet und vernetzt, sodass die Abteilstelle 8 sauber verpresst und verklebt werden kann und sich Ober- und Unterseite flüssigkeitsdicht und stoffschlüssig verbinden. Die so hergestellten Päckchen oder Sachets 2 werden in Transportrichtung T weiter transportiert. Während des Transports in der Transporteinrichtung 4 können die Abteilstellen 8 sich weiter verfestigen und stabilisieren.

Anschließend können die Päckchen, insbesondere Sachets an der Abteilstelle 8 getrennt oder perforiert werden oder Ketten einer bestimmten Länge erzeugt werden.

Die Erfindung ermöglicht prall gefüllte Päckchen mit einem ästhetischen Aussehen.

Bei Produktwechsel kann auf einfache Art und Weise das Überstehende Füllrohr 9 oder aber zumindest der hintere Abschnitt 9b des Füllrohrs ausgewechselt werden, der dann z.B. eine andere prozentuale Aufweitung aufweist oder eine andere Außenkontur.

Die Erfindung ermöglicht so einen großen Fertigungsspielraum für unterschiedlichste Produkte und Produktformen.

Die vorliegende Erfindung ist insbesondere für flüssiges oder pastöses Füllgut geeignet, da das extrudierte Hüllenmaterial, das sich erst verfestigen muss, kein Nennkaliber hat und das flüssige oder pastöse Füllgut auch kein Nennkaliber definieren kann. Die Vorrichtung ist aber auch vorteilhafterweise dazu geeignet Füllgut mit höherer Viskosität wie Wurstmasse, Brät oder Veggie-Produkte, Müsliriegel zu koextrudieren, da die Hülle dann straff auf dem Produkt aufliegen kann.

## Patentansprüche

1. Vorrichtung (1) zum Herstellen von mit flüssigem oder pastösem Füllgut, insbesondere mit flüssigen oder pastösen Lebensmitteln (14), gefüllten Päckchen, insbesondere Sachets (2),
mit einer Koextrusionseinrichtung (3) zum Koextrudieren eines Strangs (10) aus einem mit dem Füllgut (14) gefüllten aushärtbaren Hüllenmaterial (15) wobei
die Koextrusionseinrichtung (3) ein Füllrohr (9) zum Ausstoßen des Füllguts (14), sowie eine dem Füllrohr (9) zugeordnete Extrusionsdüse (13) mit einem Extrusionsspalt (11) zum Ausstoßen des Hüllenmaterials (15) umfasst, das Füllrohr (9) über eine Strecke X so über den Extrusionsspalt (11) vorsteht, dass das Hüllenmaterial (15) durch den Extrusionsspalt (11) auf das Füllrohr (9) extrudiert wird und sich entlang dem Füllrohr (9) verfestigen kann
**dadurch gekennzeichnet, dass**
sich das überstehende Füllrohr (9) zumindest abschnittsweise in Richtung Auslassöffnung (12) aufweitet.

2. Vorrichtung (1) nach Anspruch 1, **dadurch gekennzeichnet, dass**
die Vorrichtung eine Gleitmitteleinrichtung (19) zum Zuführen eines Gleitmittels zwischen Füllrohr (9) und ausgestoßenem Hüllenmaterial (15) aufweist.

3. Vorrichtung (1) nach Anspruch 1 oder 2, **dadurch gekennzeichnet, dass**
sich das überstehende Füllrohr zur Auslassöffnung (12) hin zumindest abschnittsweise konisch aufweitet.

4. Vorrichtung nach mindesten einem der Ansprüche 1- 3, **dadurch gekennzeichnet, dass**
ein in Ausstoßrichtung betrachteter vorderer Abschnitt (9a) des Füllrohrs (9) eine erste Querschnittsfläche aufweist und insbesondere eine zylindrische Außenkontur aufweist und
ein in Ausstoßrichtung betrachtet hinterer Abschnitt (9b) eine sich erweiternden Querschnittsfläche aufweist, insbesondere eine kegelstumpfförmige Außenkontur aufweist.

5. Vorrichtung nach mindestens einem der Ansprüche 1-4, **dadurch gekennzeichnet, dass** das überstehende Füllrohr austauschbar angeordnet ist oder zumindest der hintere Abschnitt (9b) des Füllrohrs austauschbar angeordnet ist.

6. Vorrichtung nach mindestens einem der Ansprüche 1-5, **dadurch gekennzeichnet, dass** die Querschnittsfläche des überstehenden Füllrohrs (9) sich zur Auslassöffnung (12) um höchstens 150%, vorzugsweise 10-100 % aufweitet.

7. Vorrichtung nach mindestens Anspruch 4, **dadurch gekennzeichnet, dass** der hintere Abschnitt (9b) aus einem anderen Material im Vergleich zum vorderen Abschnitt (9a) gebildet ist, insbesondere aus POM, PTFE oder beschichtetem Edelstahl.

8. Vorrichtung nach mindestens einem der Ansprüche 1-7, **dadurch gekennzeichnet, dass**
der vordere Abschnitt (9a) des Füllrohrs eine kürzere Länge (x1, x2) aufweist als der hintere Abschnitt (9b) des Füllrohrs.

9. Vorrichtung nach mindestens einem der Ansprüche 1-8, **dadurch gekennzeichnet, dass** die Vorrichtung eine Abteileinrichtung (60) aufweist um den Strang (10) in einzelne Päckchen (2), insbesondere Sachets (2) zu unterteilen und abzudichten.

10. Vorrichtung nach Anspruch 9, **dadurch gekennzeichnet, dass** die Abteileinrichtung (60) eine Verdrängereinrichtung (61), die das Füllgut in dem Hüllenmaterial im Strang (10) an einer Abteilstelle (8) verdrängt, insbesondere in Form gegenüberliegender in den Strang eingreifender Verdrängerelemente (61a, 61b) aufweist sowie
eine Abdreheinrichtung (62), über die das Füllrohr (9) derart gedreht werden kann, dass an der Abteilstelle (8) der Strang (10) abgedreht wird und aushärten kann.

11. Vorrichtung nach mindestens Anspruch 10, **dadurch gekennzeichnet, dass** in Transportrichtung T hinter der Verdrängereinrichtung (61) eine Transporteinrichtung, insbesondere in Form von gegenüberliegenden umlaufenden Transportmitteln z.B. Transportbändern oder -Ketten (5a,5b) angeordnet ist, zwischen denen die erzeugten Päckchen (2) transportiert werden.

12. Vorrichtung nach mindestens einem der Ansprüche 1-11, **dadurch gekennzeichnet, dass** die Abteileinrichtung (60) umfasst:
gegenüberliegende umlaufende Abteilstempel (6a, 6b), zwischen denen der Strang (10) transportiert werden kann und die das Füllgut (14), wenn sie sich auf ihrer Umlaufbahn (U) aufeinander zu bewegen, an einer Abteilstelle (8) aus dem Hüllenmaterial (15) ausstreifen und das Hüllenmaterial (15) an der Abteilstelle (8) flächig zu einem Sachet (2) verpressen können.

13. Vorrichtung (1) nach Anspruch 12, **dadurch gekennzeichnet, dass** die Vorrichtung (1)
eine Transporteinrichtung (4) mit gegenüberliegenden, umlaufenden Transportmitteln (5a, 5b), insbesondere Transportbänder oder -ketten aufweist, an denen jeweils die beabstandeten Abteilstempel (6a, 6b) angeordnet sind,
insbesondere derart, dass beim Transport der Sachets (2) in Transportrichtung (T) die Abteilstempel (6a,6b) das Hüllenmaterial an den Abteilstellen (8) weiter verpressen können.

14. Verfahren zum Herstellen von mit flüssigem oder pastösem Füllgut, insbesondere mit flüssigen oder pastösen Lebensmitteln (14) gefüllte Päckchen, insbesondere Sachets (2), insbesondere mit einer Vorrichtung (1) nach mindestens einem der Ansprüche 1-13, **dadurch gekennzeichnet, dass**
ein Strang (10) aus einem mit Füllgut (14) gefüllten aushärtbaren Hüllenmaterial (15) über eine Koextrusionseinrichtung (3) extrudiert wird
wobei die Koextrusionseinrichtung (3) ein Füllrohr (9) zum Ausstoßen des Füllguts (14), sowie eine dem Füllrohr (9) zugeordnete Extrusionsdüse (13) mit einem Extrusionsspalt (11) zum Ausstoßen des Hüllenmaterials (15) umfasst, das Füllrohr (9) über eine Strecke X so über den Extrusionsspalt (11) vorsteht und das Hüllenmaterial (15) durch den Extrusionsspalt (11) auf das Füllrohr (9) extrudiert wird und sich entlang dem Füllrohr (9) verfestigt und
das Hüllenmaterial über das überstehende Füllrohr (9), das sich zumindest abschnittsweise in Richtung Auslassöffnung (12) aufweitet, gezogen und aufgedehnt wird.

15. Verfahren nach Anspruch 14, **dadurch gekennzeichnet, dass** eine Fixierlösung auf das Hüllenmaterial auf dem überstehenden Füllrohr (9) aufgebracht wird und insbesondere das Füllgut im Strang (10) an einer Abteilstelle (8) verdrängt und das Hüllenmaterial an der Abteilstelle insbesondere durch Abdrehen oder durch flächiges Verpressen verschlossen wird.

## Geänderte Patentansprüche

### Geänderte Patentansprüche gemäss Regel 137(2) EPÜ.

1. Vorrichtung (1) zum Herstellen von mit flüssigem oder pastösem Füllgut, insbesondere mit flüssigen oder pastösen Lebensmitteln (14), gefüllten Päckchen, insbesondere Sachets (2),
mit einer Koextrusionseinrichtung (3) zum Koextrudieren eines Strangs (10) aus einem mit dem Füllgut (14) gefüllten aushärtbaren Hüllenmaterial (15) wobei
die Koextrusionseinrichtung (3) ein Füllrohr (9) zum Ausstoßen des Füllguts (14), sowie eine dem Füllrohr (9) zugeordnete Extrusionsdüse (13) mit einem Extrusionsspalt (11) zum Ausstoßen des Hüllenmaterials (15) umfasst, das Füllrohr (9) über eine Strecke X so über den Extrusionsspalt (11) vorsteht, dass das Hüllenmaterial (15) durch den Extrusionsspalt (11) auf das Füllrohr (9) extrudiert wird und sich entlang dem Füllrohr (9) verfestigen kann, wobei
eine Fixierlösung auf das Hüllenmaterial auf dem überstehenden Füllrohr (9) aufbringbar ist,
**dadurch gekennzeichnet, dass**
sich das überstehende Füllrohr (9) zumindest abschnittsweise in Richtung Auslassöffnung (12) aufweitet.

2. Vorrichtung (1) nach Anspruch 1, **dadurch gekennzeichnet, dass**
die Vorrichtung eine Gleitmitteleinrichtung (19) zum Zuführen eines Gleitmittels zwischen Füllrohr (9) und ausgestoßenem Hüllenmaterial (15) aufweist.

3. Vorrichtung (1) nach Anspruch 1 oder 2, **dadurch gekennzeichnet, dass**
sich das überstehende Füllrohr zur Auslassöffnung (12) hin zumindest abschnittsweise konisch aufweitet.

4. Vorrichtung nach mindestens einem der Ansprüche 1- 3, **dadurch gekennzeichnet, dass**
ein in Ausstoßrichtung betrachteter vorderer Abschnitt (9a) des Füllrohrs (9) eine erste Querschnittsfläche aufweist und insbesondere eine zylindrische Außenkontur aufweist und ein in Ausstoßrichtung betrachtet hinterer Abschnitt (9b) eine sich erweiternden Querschnittsfläche aufweist, insbesondere eine kegelstumpfförmige Außenkontur aufweist.

5. Vorrichtung nach mindestens einem der Ansprüche 1-4, **dadurch gekennzeichnet, dass** das überstehende Füllrohr austauschbar angeordnet ist oder zumindest der hintere Abschnitt (9b) des Füllrohrs austauschbar angeordnet ist.

6. Vorrichtung nach mindestens einem der Ansprüche 1-5, **dadurch gekennzeichnet, dass** die Querschnittsfläche des überstehenden Füllrohrs (9) sich zur Auslassöffnung (12) um höchstens 150%, vorzugsweise 10-100 % aufweitet.

7. Vorrichtung nach mindestens Anspruch 4, **dadurch gekennzeichnet, dass** der hintere Abschnitt (9b) aus einem anderen Material im Vergleich zum vorderen Abschnitt (9a) gebildet ist, insbesondere aus POM, PTFE oder beschichtetem Edelstahl.

8. Vorrichtung nach mindestens einem der Ansprüche 1-7, **dadurch gekennzeichnet, dass**
der vordere Abschnitt (9a) des Füllrohrs eine kürzere Länge (x1, x2) aufweist als der hintere Abschnitt (9b) des Füllrohrs.

9. Vorrichtung nach mindestens einem der Ansprüche 1-8, **dadurch gekennzeichnet, dass** die Vorrichtung eine Abteileinrichtung (60) aufweist um den Strang (10) in einzelne Päckchen (2), insbesondere Sachets (2) zu unterteilen und abzudichten.

10. Vorrichtung nach Anspruch 9, **dadurch gekennzeichnet, dass** die Abteileinrichtung (60) eine Verdrängereinrichtung (61), die das Füllgut in dem Hüllenmaterial im Strang (10) an einer Abteilstelle (8) verdrängt, insbesondere in Form gegenüberliegender in den Strang eingreifender Verdrängerelemente (61a, 61b) aufweist sowie
eine Abdreheinrichtung (62), über die das Füllrohr (9) derart gedreht werden kann, dass an der Abteilstelle (8) der Strang (10) abgedreht wird und aushärten kann.

11. Vorrichtung nach mindestens Anspruch 10, **dadurch gekennzeichnet, dass** in Transportrichtung T hinter der Verdrängereinrichtung (61) eine Transporteinrichtung, insbesondere in Form von gegenüberliegenden umlaufenden Transportmitteln z.B. Transportbändern oder -ketten (5a,5b) angeordnet ist, zwischen denen die erzeugten Päckchen (2) transportiert werden.

12. Vorrichtung nach mindestens einem der Ansprüche 1-11, **dadurch gekennzeichnet, dass** die Abteileinrichtung (60) umfasst:
gegenüberliegende umlaufende Abteilstempel (6a, 6b), zwischen denen der Strang (10) transportiert werden kann und die das Füllgut (14), wenn sie sich auf ihrer Umlaufbahn (U) aufeinander zu bewegen, an einer Abteilstelle (8) aus dem Hüllenmaterial (15) ausstreifen und das Hüllenmaterial (15) an der Abteilstelle (8) flächig zu einem Sachet (2) verpressen können.

13. Vorrichtung (1) nach Anspruch 12, **dadurch gekennzeichnet, dass** die Abteileinrichtung (60)
eine Transporteinrichtung (4) mit gegenüberliegenden, umlaufenden Transportmitteln (5a, 5b), insbesondere Transportbänder oder -ketten aufweist, an denen jeweils die beabstandeten Abteilstempel (6a, 6b) angeordnet sind,
insbesondere derart, dass beim Transport der Sachets (2) in Transportrichtung (T) die Abteilstempel (6a,6b) das Hüllenmaterial an den Abteilstellen (8) weiter verpressen können.

14. Verfahren zum Herstellen von mit flüssigem oder pastösem Füllgut, insbesondere mit flüssigen oder pastösen Lebensmitteln (14) gefüllte Päckchen, insbesondere Sachets (2), insbesondere mit einer Vorrichtung (1) nach mindestens einem der Ansprüche 1-13, **dadurch gekennzeichnet, dass**
ein Strang (10) aus einem mit Füllgut (14) gefüllten aushärtbaren Hüllenmaterial (15) über eine Koextrusionseinrichtung (3) extrudiert wird
wobei die Koextrusionseinrichtung (3) ein Füllrohr (9) zum Ausstoßen des Füllguts (14), sowie eine dem Füllrohr (9) zugeordnete Extrusionsdüse (13) mit einem Extrusionsspalt (11) zum Ausstoßen des Hüllenmaterials (15) umfasst, das Füllrohr (9) über eine Strecke X so über den Extrusionsspalt (11) vorsteht und das Hüllenmaterial (15) durch den Extrusionsspalt (11) auf das Füllrohr (9) extrudiert wird und sich entlang dem Füllrohr (9) verfestigt und das Hüllenmaterial über das überstehende Füllrohr (9), das sich zumindest abschnittsweise in Richtung Auslassöffnung (12) aufweitet, gezogen und aufgedehnt wird wobei
eine Fixierlösung auf das Hüllenmaterial auf dem überstehenden Füllrohr (9) aufgebracht wird.

15. Verfahren nach Anspruch 14, **dadurch gekennzeichnet, dass** das Füllgut im Strang (10) an einer Abteilstelle (8) verdrängt und das Hüllenmaterial an der Abteilstelle insbesondere durch Abdrehen oder durch flächiges Verpressen verschlossen wird.
